# EUROPÄISCHE PATENTSCHRIFT

(11) **EP 2 057 386 B1**
(45) Veröffentlichungstag und Bekanntmachung des Hinweises auf die Patenterteilung: **28.04.2010**
(21) Anmeldenummer: 07801754.8
(22) Anmeldetag: 18.08.2007
(51) Int. Cl.: F16D 66/02, F16D 66/00, B60T 17/22

(54) **TEMPERATUR- UND VERSCHLEIßSENSOR FÜR BREMS- ODER KUPPLUNGSEINRICHTUNGEN**
TEMPERATURE AND WEAR AND TEAR SENSOR FOR BRAKE OR CLUTCH DEVICES
CAPTEUR DE TEMPERATURE ET D'USURE POUR SYSTEMES DE FREINAGE OU D'EMBRAYAGE

(30) Priorität: 23.08.2006 DE 102006039590
(43) Veröffentlichungstag der Anmeldung: 13.05.2009
(73) Patentinhaber: TMD Friction Services GmbH, 51381 Leverkusen (DE)
(72) Erfinder: DEGENSTEIN, Thomas, 55130 Mainz (DE)
(74) Vertreter: Müller, Eckhard
(86) Internationale Anmeldenummer: PCT/EP2007/007314
(87) Internationale Veröffentlichungsnummer: WO 2008/022754

(56) Entgegenhaltungen:
- EP-A- 0 189 082
- DE-A1- 4 231 107
- DE-A1- 19 945 205
- US-A- 4 824 260

## Beschreibung

Die Erfindung betrifft einen Temperatursensor und einen Verschleißsensor für Brems- oder Kupplungseinrichtungen, insbesondere für Fahrzeugbremsen oder -kupplungen sowie e mit entsprechenden Sensoren ausgestattete Bremsanlage und ein Verfahren zur Steuerung einer solchen Brems- oder Kupplungsanlage.

### Stand der Technik

Bremsen, wie etwa als Scheibenbremse ausgebildete Fahrzeugbremsen, unterliegen während des Bremsvorgangs einer mitunter starken Erwärmung bzw. Erhitzung. Die beteiligten Bremskomponenten, wie etwa Bremsbelag und Bremsscheibe können sich hierbei auf mehrere 100 °C aufheizen. Gerade bei kurz aufeinander folgenden Bremsvorgängen kann infolge der an der Bremse herrschenden hohen Temperatur eine erforderliche Bremsleistung nicht mehr erbracht werden, da aufgrund der Temperatureinwirkung der Reibwert der Bremse abnimmt. Dieser, auch als Fading bezeichnete Effekt ist für die maximal erreichbare Bremswirkung als auch für die Zuverlässigkeit der Funktion der Bremse von großer Bedeutung.

Eine Ermittlung der Temperatur von Fahrzeugbremsen erfolgt vielfach anhand von Schätzverfahren, welche zum Beispiel unter Ausnutzung eines Beschleunigungs- oder Verzögerungsprofils und unter Kenntnis des Fahrzeuggewichts auf diejenige Energie schließen lassen, welche beim Bremsvorgang von kinetischer Energie in Reibenergie umgesetzt wird. Mittels einer solchen Energiebilanz können letztlich Rückschlüsse auf die Bremstemperatur gezogen werden.

Solche Schätzverfahren sind jedoch oftmals nicht hinreichend genau. Für ein für die Fahrzeugsicherheit eminent wichtiges Bauteil, wie die Fahrzeugbremse, stellt dieser Umstand einen nicht unbeträchtlichen Nachteil dar.

Aus der DE 199 45 205 A1 ist ein Thermoelement zur Bestimmung der Temperatur in einer Kontaktzone zwischen zwei in Kontakt stehenden und relativ zueinander bewegbaren Körpern (6, 8) bei der Schleifbearbeitung mittels Schleifscheiben bekannt. Diese Druckschrift bezieht sich jedoch nicht auf die Verwendung eines Thermoelementes zur Bestimmung einer Reibbelag- oder Bremsscheibentemperatur. Sie betrifft vielmehr das technische Gebiet rotierender Schleifwerkzeuge und rotierender Schleifräder und ist im Bereich der Materialbearbeitung anzusiedeln.

Aus der EP 0 189 082 A2 ist eine Einrichtung zum Messen und/oder Regeln einer Bremskraft bekannt, bei welcher wenigstens ein temperaturabhängiges Messglied an einer Bremseinrichtung angeordnet ist und eine Auswerteeinrichtung vorgesehen ist, der das temperaturabhängige Ausgangssignal des Messglieds zugeführt wird. Dabei ist die Auswerteeinrichtung zur Erzeugung eines von den gemessenen Parametern abhängigen Ausgangssignals ausgebildet, mit welchem die einzelnen Bremsen, beispielsweise an Vorderachse und Hinterachse, individuell betätigt werden können.

Aus der EP 0 337 919 B1 ist eine Bremse mit einer temperaturempfindlichen Einrichtung zum Abgeben eines Signals bekannt, welches alternativ die stationäre Temperatur des Bremsbacken-Reibelements und eine transiente Temperatur der Reibelement/Bremstrommel-Grenzfläche angibt. Die temperaturempfindliche Einrichtung weist hierfür eine erodierbare metallische Platte auf, die ein Element einer Thermopaar-Messstelle bildet, welche an der Bremsbacke befestigt ist.

Diese metallische Platte ist an einer Seitenbegrenzung des Bremsbelags befestigt, und die elektrischen Signale werden über freiliegende, mit der Platte verbundene Kabel übermittelt. Gerade diese von außen zugeführten und freiliegenden Kabel sind besonders störanfällig. Des Weiteren ist die seitliche Anbringung der erodierbaren metallischen Platte recht arbeits- als auch zeitintensiv bei der Herstellung eines Bremsbelags.

Aus der DE 31 27 302 C2 ist ferner eine Einrichtung zur Vortriebsregelung an Kraftfahrzeugen bekannt, bei welcher Bremsbeläge der Radbremsen mit Temperaturfühlern versehen sind, deren elektrische Ausgangssignale ein indirektes Maß für die Bremsscheibentemperatur sind. Die Temperaturfühler sind hierbei in für die Aufnahme von Verschleißfühlern vorgesehenen Aussparungen der Bremsbeläge oder an den Verschleißfühlern selbst angebracht. Diese Verschleißsensoren können hierbei als Thermoelemente ausgebildet werden. Deren elektrische Unterbrechung oder ein über die Bremsscheibe vermittelter Massenschluss löst ein Verschleiß-Anzeigesignal aus.

Im Stand der Technik sind weiterhin Oberflächen-Thermoelemente bekannt, wie beispielsweise in der DE 34 11 332 A1 beschrieben.

Derartige Oberflächen-Thermoelemente bestehen typischerweise aus zwei elektrisch zueinander isolierten und parallel bis zu einer Oberflächen-Messstelle verlaufenden elektrischen Leitern aus unterschiedlichen Werkstoffen. Die beiden elektrischen Leiter enden stumpf an der Oberflächen-Messstelle unter Bildung einer ebenen Stirnfläche, welche mit einem dünnen metallischen Belag versehen ist, der die beiden Leiter elektrisch leitend verbindet.

Aufgrund des dünnen metallischen Belags weisen derartige Oberflächen-Thermoelemente eine inhärente Trägheit auf, da sich für die Messung einer Temperatur dieser dünne metallische Belag vollständig an die zu messende Temperatur anpassen muss.

Zudem sind solche Oberflächen-Thermoelemente für die Messung einer Bremsentemperatur ungeeignet, da ein solches Element durch den naturbedingten Verschleiß eines Reibbelags regelmäßig zerstört oder in seiner Funktion beeinträchtigt würde.

Aus "Fahrwerktechnik, Bremsdynamik und Pkw-Bremsanlagen, Manfred Burckhardt, Jörnsen Reimppel, Vogelverlag 1991, ISBN 3802301846, Seite 209" ist weiterhin ein in einen Reibbelag eingebettetes Oberflächen-Thermoelement bekannt, wobei der elektrische Kontakt zwischen den beiden Thermodrähten die Bremsscheibe selbst bildet, wenn diese während der Bremsung am Reibbelag anliegt.

Eine derartige Vorrichtung beschreibt auch der Artikel "Dynamische Temperaturmessung zwischen Bremsbelag und -Scheibe während des Bremsvorganges, M. Bargende, R. G. Pütter, VDI-Berichte Nr. 632, 1987, Seite 283 bis 299".

Sämtlichen bekannten Sensoreinrichtungen im Kupplungs- oder Bremsbereich ist gemein, dass entweder Temperatur und Verschleiß jeweils mit einzeln dafür vorgesehenen Sensorelementen bestimmt werden müssen oder dass, wie in EP 0 189 082, der Verschleiß aus der gemessenen Temperatur errechnet wird. Die bekannten Verfahren zur Messung des Reibbelagverschleißes basieren zudem lediglich auf der Detektion einer vorgegebenen Verschleißgrenze. Ein graduelles, kontinuierliches und quantitatives Bestimmen des brems- oder kupplungsbedingten Verschleißes ist mit derzeit bekannten Vorrichtung nicht möglich.

### Problem

Der vorliegenden Erfindung liegt daher die Aufgabe zugrunde, eine zuverlässige und zugleich kostengünstige Messung der Temperatur einer Brems- oder Kupplungseinrichtung zur Verfügung zu stellen, welche zudem ein hohes Maß an Genauigkeit aufweist.

Weiterhin ist es Ziel der Erfindung, mithilfe der verbesserten und genaueren Temperatur- bzw. Verschleißsensoren eine multifunktionale Brems- oder Kupplungsanlage sowie ein entsprechendes Verfahren zum Betrieb einer solchen Brems- oder Kupplungsanlage zur Verfügung zu stellen.

### Erfindung und vorteilhafte Wirkungen

Die der Erfindung zugrunde liegende Aufgabe wird mittels einer Vorrichtung zur Erfassung von Temperatur und/oder Verschleiß einer Brems- oder Kupplungseinrichtung gemäß Patentanspruch 1 sowie einer Brems- oder Kupplungsanlage gemäß Patentanspruch 7 und einem Verfahren zur Steuerung einer Brems- oder Kupplungsanlage gemäß Patentanspruch 10 gelöst. Weitere vorteilhafte Ausführungsformen der Erfindung sind in den jeweiligen Unteransprüchen angegeben.

Die erfindungsgemäße Vorrichtung ist zur Erfassung von Temperatur und/oder Verschleiß einer Brems- oder Kupplungseinrichtung vorgesehen. Im Falle der Bremseinrichtung ist zumindest ein Reibbelag, wie etwa ein Bremsklotz oder ein Bremsbelag und ein drehbar gelagerter Bremskörper, wie etwa eine Bremsscheibe, vorgesehen. Der Bremskörper und der Reibbelag sind beim Bremsvorgang zur Ausübung einer Bremswirkung aneinander reibend in Eingriff bringbar.

Beim Bremsvorgang kommen die Reibfläche des Reibbelags und die gegenüberliegend vorgesehene Reibfläche des Bremskörpers vorzugsweise über der gesamten Fläche des Reibbelags in Kontakt, sodass eine möglichst große Reibung zwischen dem Reibbelag und dem Bremskörper erreicht werden kann, die wiederum zu einer hohen Bremswirkung führt.

Typischerweise ist der Reibbelag in Axialrichtung bezüglich des drehbar gelagerten oder rotierenden Bremskörpers verschiebbar, sodass die Brems- bzw. die Reibkraft zwischen Bremskörper und Reibbelag variabel angepasst werden kann.

Innerhalb des Reibbelags sind zumindest zwei voneinander isolierte elektrische Leiter aus unterschiedlichem Material vorgesehen, welche zur Bildung eines Thermo-Elements über den Bremskörper elektrisch leitend verbindbar sind. Demgemäß weist die Bremseinrichtung ein inhärentes Thermoelement auf, dessen Einzelbestandteile, nämlich zwei elektrische Leiter unterschiedlicher Materialien und deren elektrisch leitende Verbindung, an unterschiedlichen, miteinander mechanisch wechselwirkenden Komponenten der Bremseinrichtung, nämlich Reibbelag und Bremskörper, angeordnet bzw. in diesen untergebracht sind.

Hierbei ist vorgesehen, dass die beiden elektrischen Leiter, die vorzugsweise aus unterschiedlich legierten Werkstoffen oder unterschiedlichen Metalllegierungen bestehen, in einer ebenen Stirnfläche, nämlich der Reibfläche des Reibbelags enden. Innerhalb des Reibbelags besteht zwischen den beiden elektrischen Leitern kein elektrischer Kontakt. Sie sind innerhalb der Reibbelagstruktur voneinander elektrisch isoliert.

Zur Bildung des Thermoelements, welches eine elektrische Verbindung der beiden Leiter erfordert, ist gemäß der Erfindung ein Bremskörper, wie etwa eine Bremsscheibe vorgesehen, von der zumindest die mit dem Reibbelag in Eingriff bringbare Reibfläche aus elektrisch leitendem Material besteht oder mit einem solchen zumindest mit einer Mindestschichtdicke beschichtet ist.

Auf diese Art und Weise wird ein verschleißendes Thermoelement für eine Bremseinrichtung zur Verfügung gestellt, welches aber selbst bei einem fortgeschrittenen Verschleiß noch voll funktionstüchtig bleibt. Zugleich wird gemäß der Erfindung - anders als in der DE 34 11 332 A1 - eine direkte Temperaturmessung ermöglicht, da die leitende Verbindung zwischen den beiden elektrischen Leitern des Thermoelements gerade von demjenigen Bauteil der Bremse zur Verfügung gestellt wird, dessen Temperatur mit dem erfindungsgemäßen Thermoelement gemessen werden soll.

Anders als bei herkömmlichen Oberflächen-Thermoelementen ist eine thermische Anpassung des die beiden Leiter elektrisch verbindenden dünnen metallischen Belags nicht erforderlich. Die Trägheit des erfindungsgemäßen Thermoelements ist daher verschwindend gering.

In gleicher Art und Weise geben die über die beiden elektrischen Leiter erhältlichen elektrischen Signale Aufschluss über die Temperatur an der Reibfläche des Reibbelags. Das in das Reibpaar, nämlich Reibbelag und Bremskörper integrierte Thermoelement ermöglicht somit eine unmittelbare Temperaturmessung direkt an der Schnittstelle zwischen den aneinander reibenden Reibflächen der Bremse. Die Temperatur kann direkt an derjenigen Stelle gemessen werden, an der die Reibungswärme beim Bremsvorgang entsteht.

Diese Messung erfolgt nahezu vollkommen unabhängig von wärmeleitenden Körpern oder Elementen, die - wie im Stand der Technik vielfach üblich - die an der Grenzfläche zwischen Reibbelag und Bremskörper entstehende Wärme erst zu einem davon entfernt angeordneten thermischen Sensor leiten müssen.

Erste Versuche haben gezeigt, dass sich durch das Schließen der Thermoelemente über die Bremsscheibe die Ansprechzeit des Sensors auf den Bereich von Millisekunden signifikant verkürzt. Mit dem erfindungsgemäßen Temperatursensor lassen sich daher Temperaturspitzen und sogenannte Hotspots, d.h. Flecken auf der Bremsscheibe, detektieren.

Zudem kann die erfindungsgemäße Vorrichtung relativ kostengünstig und mit nur wenigen Arbeitsschritten realisiert werden. So müssen lediglich bei der Herstellung des Reibbelags zumindest zwei elektrische Leiter in dessen Struktur eingebracht werden. Diese beiden elektrischen Leiter werden vorzugsweise über die Belagträgerplatte aus dem Reibbelag herausgeführt und mit einer dafür vorgesehenen Auswerte- oder Steuereinheit verbunden.

Das andere Ende der beiden Leiter schließt flächenbündig mit der Reibfläche des Reibbelags ab und gelangt beim Bremsvorgang in elektrischen Kontakt mit dem Bremskörper, wie etwa der Bremsscheibe.

Beim Bremsvorgang kann somit sogar ein ansteigender Temperaturverlauf nahezu ohne Zeitverzögerung gemessen und bei einem Einbau in einem Kraftfahrzeug an den Fahrer oder an eine Bordelektronik übermittelt werden.

In entsprechender Weise lässt sich der erfindungsgemäße Sensor zur Ermittlung der Temperatur und des Verschleißes des Reib- bzw. Kupplungsbelages bei Kupplungseinrichtungen ersetzen.

Es ist insbesondere vorgesehen, dass die beiden elektrischen Leiter an einen elektrischen Schwingkreis koppelbar sind, sodass hierüber eine Verschleißmessung des Reibbelags erfolgen kann. Die längenabhängige Impedanz der beiden elektrischen Leiter gibt direkt Aufschluss über deren Länge und somit über die verbleibende Dicke des Reib- oder Kupplungsbelags. Der Grad der Abnutzung oder des Verschleißes des Reibbelags kann hiermit kontinuierlich mit Hilfe der beiden elektrischen Leiter des Thermoelements gemessen werden.

Die Erfindung stellt somit eine universelle Vorrichtung zur Erfassung von sowohl Temperatur als auch eines Verschleißgrades eines Reibbelags zur Verfügung.

Nach einer ersten vorteilhaften Ausführungsform der Erfindung verlaufen die zumindest beiden elektrischen Leiter oder Paare elektrischer Leiter innerhalb des Reibbelags im Wesentlichen parallel zueinander. Hierdurch ist gewährleistet, dass sich der Abstand der beiden elektrischen Leiter auch bei einem Verschleiß des Reibbelags nicht ändert. Somit bleiben die zur Erfassung der Temperatur maßgeblichen Größen des Thermoelements auch bei fortwährendem Verschleiß im Wesentlichen konstant.

Nach einer weiteren bevorzugten Ausführungsform der Erfindung ist vorgesehen, dass die zumindest zwei elektrischen Leiter im Wesentlichen parallel zur Flächennormalen der Reibfläche des Bremskörpers bzw. Kupplungskorpus verlaufen. Bei dieser Ausführungsform münden die Enden der elektrischen Leiter mit ihren Stirnflächen bündig in die Reibfläche des Reib- bzw. Kupplungsbelags, dessen Reibfläche zur Erzielung einer maximalen Bremswirkung naturgemäß parallel zur Reibfläche des Bremskörpers bzw. zur Erzielung eines maximalen Reibschlusses parallel zur Reibfläche des Kupplungskörpers verläuft.

Die senkrechte Anordnung der elektrischen Leiter des Thermoelements zu den Reibflächen hat insbesondere den Vorteil, dass die Strecke, entlang welcher die elektrischen Leiter durch den Reibbelag hindurchgeführt werden müssen, möglichst gering ist.

Alternativ zur senkrechten Anordnung von elektrischen Leitern und den Reibflächen von Reibbelag und Bremskörper bzw. Kupplungskörper kann selbstverständlich auch eine zueinander parallele, aber schräg zur Flächennormalen der Reibfläche verlaufende Anordnung der beiden elektrischen Leiter gewählt werden. Bei einer solchen Konfiguration kann der Anteil der Querschnittsfläche der elektrischen Leiter an der Reibfläche des Reibbelags etwas vergrößert werden, was mitunter zu einer höheren Sensitivität des Thermoelements führen kann.

Nach einer weiteren vorteilhaften Ausführungsform der Erfindung ist vorgesehen, dass zur Messung einer räumlichen Temperaturverteilung mehrere Paare elektrischer Leiter aus jeweils unterschiedlichen Materialien innerhalb des Reibbelags an verschiedenen Stellen vorgesehen sind. Somit kann an unterschiedlichen Positionen verteilt über die Reibfläche des Reibbelags eine Temperatur erfasst und entsprechend ausgewertet werden. Ausgehend von einer über die Reibfläche ortsaufgelöst gemessenen Temperaturverteilung können Rückschlüsse über den Zustand und den Verschleißgrad des Reibbelags gezogen werden.

Nach einer weiteren bevorzugten Ausführungsform ist vorgesehen, dass die im Reibbelag angeordneten elektrischen Leiter im Bremsbetrieb gemeinsam mit dem Reibbelag verschleißen. Somit ist sichergestellt, dass die zum Brems- oder Kupplungskörper hin gerichteten Enden der beiden elektrischen Leiter stets flächenbündig und mit ihrer Stirnseite in die Reibfläche des Reibbelags münden. Die beiden, vorzugsweise senkrecht zur Trägerplatte und senkrecht zu den Reibflächen der Brems- bzw. Kupplungselemente verlaufenden elektrischen Leiter ermöglichen trotz eines beträchtlichen Verschleißes ein präzises sowie zuverlässiges Messen und Erfassen von Temperatur und Verschleißgrad.

Nach einem weiteren unabhängigen Aspekt betrifft die Erfindung eine Bremsanlage mit zumindest einer Bremseinrichtung oder einer Kupplungsanlage mit einer Kupplungseinrichtung, die zumindest eine erfindungsgemäße Vorrichtung zur Erfassung von Temperatur und/oder Verschleiß der Brems- bzw. Kupplungseinrichtung aufweist. Für die Bremsanlage ist ferner eine Steuereinheit zur Erfassung eines Betriebszustandes einer jeden Bremseinrichtung vorgesehen, welche in Abhängigkeit des jeweils ermittelten Betriebszustandes der Bremseinrichtungen zur individuellen Anpassung von Bremsparametern für jede Bremseinrichtung ausgebildet ist.

Eine solche Bremsanlage ist insbesondere für Kraftfahrzeuge mit mehreren einzelnen Bremseinrichtungen vorgesehen, die beispielsweise an jeweils einem der vier Räder angeordnet sind. Signale einer getrennten sensorischen Erfassung der Temperatur der Bremskomponenten und/oder eines etwaigen Verschleißgrads werden hierbei an die Steuereinheit übermittelt. In Abhängigkeit der ermittelten Temperaturen und/oder Verschleißgrade kann somit eine individuelle Ansteuerung der einzelnen Bremseinrichtungen erfolgen, sodass diese letztendlich möglichst gleichmäßig beansprucht werden und möglichst homogen verschleißen.

Wird beispielsweise ermittelt, dass eine oder gar zwei der Bremseinrichtungen eine erhöhte Temperatur aufweisen, so kann vorgesehen werden, dass der Bremsdruck auf diese Bremseinrichtungen reduziert wird, während in entsprechender Art und Weise der Bremsdruck auf die verbleibenden Bremseinrichtungen mit geringerer Temperatur im Bedarfsfall erhöht wird.

Durch die separate Ermittlung der tatsächlich vorherrschenden Temperatur an den verschiedenen Bremsen eines Fahrzeuges kann eine Bremskraftverteilung des Fahrzeugs so angepasst werden, dass die kältere Bremse stärker beansprucht wird, während für heiße bzw. erwärmte Bremsen eine Entlastung vorgesehen ist. Hierdurch lässt sich die Bremswirkung auf das Fahrzeug insgesamt optimieren.

Nach einer Weiterbildung ist insbesondere vorgesehen; dass der Betriebszustand einer Bremseinrichtung zumindest Temperatur und/oder Verschleißgrad des Reibbelags und/oder eines Bremskörpers, wie etwa der Bremsscheibe umfasst. Die Bremsparameter, hierunter insbesondere der Bremsdruck, werden für jede Fahrzeugbremse einzeln und in Abhängigkeit der zuvor ermittelten Betriebszustandsparameter, nämlich aktuelle Temperatur und/oder Verschleißgrad eines Reibbelags respektive einer Bremsscheibe, bestimmt.

Nach einer Weiterbildung der Erfindung ist vorgesehen, dass die Steuereinheit der Bremsanlage zur Regelung oder Einstellung eines maximal aufwendbaren Bremsdrucks und/oder zur Einstellung eines Lüftspiels zwischen Reibbelag und Bremskörper ausgebildet ist. Ein solcher Steuermechanismus ist insbesondere für elektrohydraulisch betätigbare Bremseinrichtungen vorgesehen.

So kann das von Bremsscheibe und Reibbelag gebildete Thermoelement nicht nur zur Ermittlung einer Temperatur bzw. eines Reibbelagverschleißes genutzt werden. Es dient vielmehr auch als Signalgeber, ob ein mechanischer Kontakt zwischen Bremsscheibe und Reibbelag besteht. Der Verschleiß- und Temperatursensor kann somit auch als Kontaktgeber fungieren, um beispielsweise bei regennasser Fahrbahn die Bremsscheiben durch vorsichtiges Heranführen der Bremsbeläge trocken zu schleifen. Dies trägt präventiv dazu bei, dass sich auch bei nassen Bremsscheiben die Bremswirkung nicht verringert.

Nach einem weiteren unabhängigen Aspekt betrifft die Erfindung ein Verfahren zur Steuerung einer Bremsanlage, wobei zunächst ein Verschleiß von zumindest einem Reibbelag einer Bremseinrichtung ermittelt und/oder die Temperatur von zumindest einer Bremseinrichtung mit Hilfe des erfindungsgemäßen Sensors ermittelt wird. Hiernach werden abhängig von den ermittelten Betriebszustandsparametern, vorzugsweise Verschleiß und/oder Temperatur, individuelle Bremsparameter, wie etwa Bremsdruck oder eine Positionierung der Bremsbeläge, ermittelt. Schließlich werden die einzelnen Bremseinrichtungen in Abhängigkeit der für jede Bremseinrichtung individuell bestimmten Bremsparameter angesteuert und/oder im Bedarfsfall entsprechend betätigt.

Die Durchführung der Verschleißmessung erfolgt vorzugsweise zu Betriebsbeginn, wenn - eine definierte Standzeit vorausgesetzt - von einer kalten Brems- oder auch Kupplungseinrichtung ausgegangen werden kann. Durch eine solche Messung erhält man eine Art Referenzwert, der für eine Anpassung von Werten, die unter Temperatureinwirkung bestimmt wurden, Verwendung finden kann. Eine solche Kalt-Messung ermöglicht somit eine hinreichende Kalibrierung der Bremsanlage bzw. der Verschleiß- und/oder Temperatursensoren.

Die erfindungsgemäßen Temperatur- oder Verschleißsensoren sind insbesondere für Bremsen von Kraftfahrzeugen vorgesehen, sie können aber auch genauso wie eine darauf basierende Bremsanlage auch auf anderen Anwendungsgebieten für Bremsvorrichtungen allgemein, so etwa für Druckmaschinen oder auch beliebige Kupplungsvorrichtungen, Verwendung finden.

### Ausführungsbeispiel

Weitere Ziele, Merkmale sowie vorteilhafte Anwendungsmöglichkeiten der vorliegenden Erfindung ergeben sich aus der nachfolgenden Beschreibung eines Ausführungsbeispiels anhand der Zeichnungen. Dabei bilden sämtliche beschriebenen und/oder bildlich dargestellten Merkmale in ihrer sinnvollen Kombination den Gegenstand der Erfindung; auch unabhängig von den Ansprüchen und deren Rückbeziehung.

Es zeigen:
- Figur 1: eine schematische Querschnittsdarstellung durch eine Bremseinrichtung mit einem kombinierten Verschleiß- und Temperatursensor und
- Figur 2: ein Blockschaltbild einer Bremsanlage mit insgesamt vier Bremseinrichtungen und einer Steuereinheit.

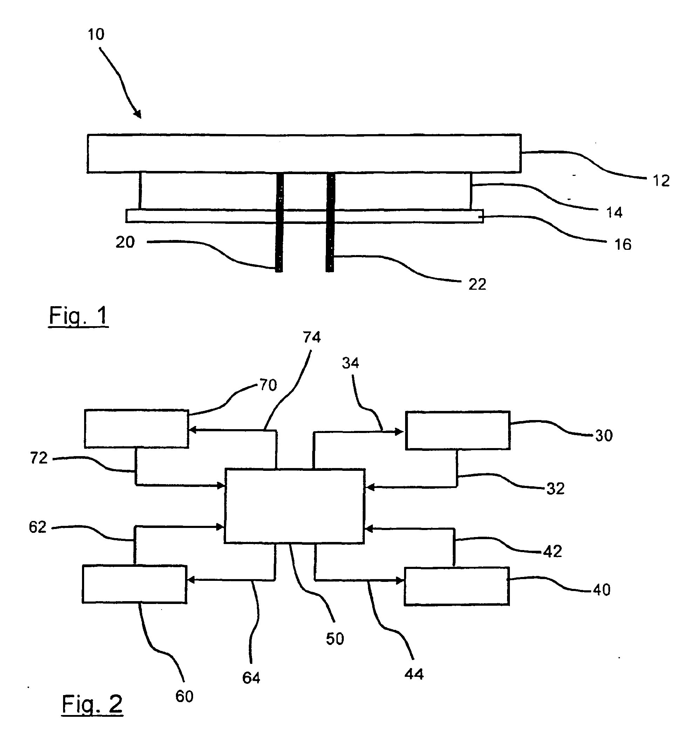

Die Bremsvorrichtung 10 gemäß Figur 1 weist eine drehbar gelagerte Bremsscheibe 12 und einen mit der Bremsscheibe 12 in Eingriff bringbaren Reibbelag 14 auf, welcher wiederum an einer Belagträgerplatte 16 angeordnet ist. Zur Ausübung einer Bremswirkung wird der aus Belagträgerplatte 16 und Reibbelag 14 bestehende Bremsbelag nach oben gegen die sich drehende Bremsscheibe 12 gedrückt, so dass die ebenen Reibflächen von Bremsscheibe 12 und Reibbelag 14 aneinander reiben, um die zum Bremsen erforderliche Reibkraft aufzubringen.

Von der Rückseite, in der Darstellung gemäß Figur 1 von unten, sind zwei elektrische Leiter 20, 22 durch den Bremsbelag 14 hindurchgeführt. Diese aus unterschiedlichen Materialien bestehenden elektrischen Leiter 20, 22 schließen mit ihrer Stirnseite bündig mit der Reibfläche des Reibbelags 14 ab. Die beiden elektrischen Leiter 20, 22 bilden zusammen mit der elektrisch leitend ausgebildeten oder zumindest ausreichend mit einem leitenden Material beschichteten Bremsscheibe 12 ein Thermoelement.

Die beiden elektrischen Leiter 20, 22 sind aus unterschiedlichen Werkstoffen, so zum Beispiel aus unterschiedlichen Metallen oder unterschiedlichen Metalllegierungen oder dergleichen, gebildet. Innerhalb des Reibbelags 14 sowie im Bereich der Durchführung durch die Belagträgerplatte 16 sind die beiden Leiter 20, 22 elektrisch voneinander isoliert. Eine leitende Verbindung zwischen ihnen wird letztlich nur für die Reibschicht der Bremsscheibe 12 hergestellt.

Der elektrische Kontakt zwischen den beiden elektrischen Leitern 20, 22 besteht insbesondere dann, wenn die Bremseinrichtung 10 betätigt und der Reibbelag 14 mit der Bremsscheibe 12 reibend in Eingriff gelangt.

Die beiden elektrischen Leiter 20, 22 bilden nicht nur ein Thermoelement, sondern können auch bei entsprechender Kontaktierung mit einem elektrischen Schwingkreis zur Dickenbestimmung der Reibschicht 14 Verwendung finden. Mittels eines, hier nicht explizit dargestellten Schwingkreises kann nämlich die Impedanz der beiden elektrischen Leiter 20, 22 bestimmt werden, was Rückschlüsse auf die Länge der zusammen mit dem Reibbelag 14 verschleißenden Leiter 20, 22 und somit auch Rückschlüsse auf die verbleibende Belagdicke zulässt.

Auf diese Weise kann bei dieser Art von Bremseinrichtung 10 mit relativ einfachen Mitteln sowohl die Temperatur als auch ein Verschleiß der Bremskomponenten 12, 14 kontinuierlich, präzise und kostengünstig ermittelt werden. Zudem wird die Temperatur- oder die Verschleißmessung von einer Abnutzung oder von einem Verschleiß des Reibbelags 14 kaum beeinträchtigt. Sowohl Temperatursensor als auch Verschleißsensor bleiben bis zu einer minimal zulässigen Belagdicke vollständig intakt.

Figur 2 zeigt ein Blockschaltbild einer Bremsanlage, welche insgesamt vier Bremseinrichtungen 30, 40, 60, 70 aufweist. Eine derartige Bremsanlage ist beispielsweise für ein vierrädriges Kraftfahrzeug vorgesehen. Jede jeweils für ein Rad vorgesehene Bremseinrichtung 30, 40, 60, 70 ist elektrisch mit einer zentralen Steuereinheit 50 verbunden. Über die Signalwege 32, 42, 62, 72 werden Temperatur- oder Verschließsignale der jeweiligen Bremseinrichtung 30, 40, 60, 70 an die Steuereinheit 50 übermittelt. Anhand der ermittelten Messdaten kann diese nun zur Homogenisierung einer Belastung der Bremsen unterschiedliche und auf die jeweiligen Bremseinrichtungen 30, 40, 60, 70 abgestimmten Bremsparameter bestimmen, die über die Signalwege 34, 44, 64, 74 an die jeweiligen Bremseinrichtungen 40, 30, 60, 70 übermittelt werden können.

Vorzugsweise sind die einzelnen Bremseinrichtungen 30, 40, 60, 70 separat ansteuerbar und regelbar, um diese ihrem Abnutzungs- oder Belastungsgrad anzusteuern. Die Steuereinheit 50 kann beispielsweise in einer ESP-Steuerung integriert werden, um eine Anpassung des Bremsdrucks in Abhängigkeit von Bremstemperatur oder Bremsbeanspruchung zu ermöglichen. Auf diese Art und Weise kann ein sicherheitskritisches Bremsfading reduziert werden.

Ziel dieser Ansteuerung ist ferner, dass alle Fahrzeugbremsen sich ihrer Bauart entsprechend gleichmäßig erhitzen, wodurch ein Ausfall einzelner Bremseinrichtungen zeitlich verzögert oder gar verhindert werden kann. Besonders stark beanspruchten Bremsen können beispielsweise längere Zeitintervalle für eine Abkühlung zugewiesen werden. Weiterhin ist es möglich, dass durch eine Homogenisierung und eine Vergleichmäßigung der Bremsbelastungen und des Bremsenverschleißes auch ein Bremsenquietschen effektiv unterbunden werden kann, sodass letztlich ein höherer Bremskomfort entsteht.

### Bezugszeichenliste

- 10: Bremseinrichtung
- 12: Bremsscheibe
- 14: Reibbelag
- 16: Belagträgerplatte
- 20: Elektrischer Leiter
- 22: Elektrischer Leiter
- 30: Bremseinrichtung
- 32: Signalpfad
- 34: Signalpfad
- 40: Bremseinrichtung
- 42: Signalpfad
- 44: Signalpfad
- 50: Steuereinheit
- 60: Bremseinrichtung
- 62: Signalpfad
- 64: Signalpfad
- 70: Bremseinrichtung
- 72: Signalpfad
- 74: Signalpfad

## Patentansprüche

1. Vorrichtung zur Erfassung von Temperatur und/oder Verschleiß einer Bremseinrichtung (10) Kupplungseinrichtung o. dgl., die zumindest einen Reibbelag (14) bzw. Kupplungskörper und einen drehbar gelagerten Bremskörper (12) aufweist, welche zur Ausübung einer Brems- bzw. Kupplungswirkung aneinander reibend in Eingriff bringbar sind, wobei zumindest zwei innerhalb des Reibbelags (14) voneinander isolierte elektrische Leiter unterschiedlichen Materials vorgesehen sind, die zur Bildung eines Thermoelements über den Bremskörper (12) bzw. den Kopplungskörper elektrisch leitend verbindbar sind, **dadurch gekennzeichnet, dass** die Vorrichtung einen an die beiden elektrischen Leiter (20, 22) koppelbaren elektrischen Schwingkreis aufweist und eine Verschleißmessung des Reibbelags (14) mit dem Schwingkreis erfolgt.

2. Vorrichtung nach Anspruch 1, **dadurch gekennzeichnet, dass** die zumindest zwei elektrischen Leiter (20, 22) innerhalb des Reibbelags (14) im Wesentlichen parallel zueinander verlaufen.

3. Vorrichtung nach einem der vorhergehenden Ansprüche, **dadurch gekennzeichnet, dass** die zumindest zwei elektrischen Leiter (20, 22) im Wesentlichen parallel zur Flächennormalen der Reibfläche des Bremskörpers (12) bzw. Kupplungskörpers verlaufen.

4. Vorrichtung nach einem der vorhergehenden Ansprüche, **dadurch gekennzeichnet, dass** die zumindest zwei elektrischen Leiter (20, 22) flächenbündig mit der Reibfläche des Reibbelags (14) abschließen.

5. Vorrichtung nach einem der vorhergehenden Ansprüche, **dadurch gekennzeichnet, dass** zur Messung einer räumlichen Temperaturverteilung Paare elektrischer Leiter (20, 22) innerhalb das Reibbelags (14) an verschiedenen Stellen vorgesehen sind.

6. Vorrichtung nach einem der vorhergehenden Ansprüche, **dadurch gekennzeichnet, dass** die im Reibbelag (14) vorgesehenen elektrischen Leiter (20, 22) im Brems- bzw. Kupplungsbetrieb gemeinsam mit dem Reibbelag (14) verschleißen.

7. Bremsanlage mit zumindest einer Bremseinrichtung (30, 40, 60, 70), die zumindest eine Vorrichtung nach einem der vorhergehenden Ansprüche aufweist, **dadurch gekennzeichnet, dass** zumindest eine Steuereinheit (50) zur Erfassung eines Betriebszustandes der zumindest einen Bremseinrichtung (30, 40, 60, 70) vorgesehen ist, welche in Abhängigkeit des jeweils ermittelten Betriebszustandes zur individuellen Anpassung von Bremsparametern für die zumindest eine Bremseinrichtung (30, 40, 60, 70) ausgebildet ist.

8. Bremsanlage nach Anspruch 7, **dadurch gekennzeichnet, dass** der Betriebszustand einer Bremseinrichtung (30, 40, 60, 70) zumindest Temperatur und/oder Verschleißgrad eines Reibbelags (14) und/oder eines Bremskörpers (12) umfasst.

9. Bremsanlage nach einem der vorhergehenden Ansprüche 7 oder 8, **dadurch gekennzeichnet, dass** die Steuereinheit (50) zur Regelung oder Einstellung eines maximal aufwendbaren Bremsdrucks und/oder eines Lüftspiels zwischen Reibbelag (14) und Bremskörper (12) ausgebildet ist.

10. Verfahren zur Steuerung einer Bremsanlage nach einem der vorhergehenden Ansprüche 7 bis 9, **gekennzeichnet durch** die Schritte:
- Ermitteln eines Verschleißes von zumindest einem Reibbelag (14) der Bremseinrichtung (10; 30, 40, 60, 70) mittels einer Vorrichtung nach einem der Ansprüche 1-6,
- Ermitteln einer Temperatur zumindest einer Bremseinrichtung (10; 30, 40, 60, 70) mittels einer Vorrichtung nach einem der Ansprüche 1-6,
- Bestimmung von individuellen Bremsparametern für die zumindest eine Bremseinrichtung (10; 30, 40, 60, 70) in Abhängigkeit von den für jede Bremseinrichtung (10; 30, 40, 60, 70) ermittelten Parametern Verschleiß und/oder Temperatur,
- Ansteuern und Betätigen der zumindest einen Bremseinrichtung (10; 30, 40, 60, 70) in Abhängigkeit der für die zumindest eine Bremseinrichtung (10; 30, 40, 60, 70) individuell bestimmten Bremsparameter.

## Claims

1. Device for detecting temperature and/or wear of brake equipment (10), clutch equipment or the like, which comprises at least one friction lining (14) or clutch body and a rotatably mounted brake body (12), which for exertion of a braking or coupling action can be brought into frictional interengagement, wherein at least two electrical conductors insulated from one another and of different materials are provided within the friction lining (14), which conductors for formation of a thermoelement are electrically conductively connectible by way of the brake body (12) or the clutch body, **characterised in that** the device comprises an electrical oscillator circuit, which can be coupled with the two electrical conductors (20, 22), and a wear measurement of the friction lining (14) is carried out by the oscillator circuit.

2. Device according to claim 1, **characterised in that** the at least two electrical conductors (20, 22) run substantially parallel to one another within the friction lining (14).

3. Device according to any one of the preceding claims, **characterised in that** the at least two electrical conductors (20, 22) run substantially parallel to surface normals of the friction surface of the brake body (12) or clutch body.

4. Device according to any one of the preceding claims, **characterised in that** the at least two electrical conductors (20, 22) have surface flushness with the friction surface of the friction lining (14).

5. Device according to any one of the preceding claims, **characterised in that** for measurement of a three-dimensional temperature distribution pairs of electrical conductors (20, 22) are arranged within the friction lining (14) at different locations.

6. Device according to any one of the preceding claims, **characterised in that** the electrical conductors (20, 22) provided in the friction lining (14) wear, in brake or clutch operation, together with the friction lining (14).

7. Brake installation with at least one brake equipment (30, 40, 60, 70), which comprises at least one device according to any one of the preceding claims, **characterised in that** at least one control unit (50) for detection of an operational state of the at least one brake equipment (30, 40, 60, 70) is provided, which is constructed for individual adaptation of braking parameters for the at least one brake equipment (30, 40, 60, 70) in dependence on the respectively determined operational state.

8. Brake installation according to claim 7, **characterised in that** the operational state of a brake equipment (30, 40, 60, 70) comprises at least temperature and/or degree of wear of a friction lining (14) and/or a brake body (12).

9. Brake installation according to one of the preceding claims 7 and 8, **characterised in that** the control unit (50) is constructed for regulation or setting of a maximum usable braking pressure and/or an air play between friction lining (14) and brake body (12).

10. Method of controlling a brake installation according to any one of the preceding claims 7 to 9, **characterised by** the steps:
- ascertaining a wear of at least one friction lining (14) of the brake equipment (10; 30, 40 60, 70) by means of a device according to any one of claims 1 to 6,
- ascertaining a temperature of at least one brake equipment (10; 30, 40, 60, 70) by means of a device according to any one of claims 1 to 6,
- determining individual braking parameters for the at least one brake equipment (10; 30, 40, 60, 70) in dependence on the parameters of wear and/or temperature ascertained for each brake equipment (10; 30, 40, 60, 70) and
- controlling and actuating the at least one brake equipment (10; 30, 40, 60, 70) in dependence on the braking parameters individually determined for the at least one brake equipment (10; 30, 40, 60, 70).

## Revendications

1. Dispositif de détection de la température et/ou de l'usure d'un dispositif de freinage (10), d'un dispositif d'embrayage ou similaires, qui présentent au moins une garniture de frottement (14) ou un corps d'embrayage et un corps de freinage (12) montés à rotation et qui, pour exercer un effet de freinage ou d'embrayage, peuvent être amenés à s'engager l'un sur l'autre à frottement,
au moins deux conducteurs électriques isolés l'un de l'autre et en matériaux différents étant prévus à l'intérieur de la garniture de frottement (14) et pouvant être reliés de manière électriquement conductrice par l'intermédiaire du corps de freinage (12) ou du corps d'embrayage pour former un thermo-élément,
**caractérisé en ce que**
le dispositif présente un circuit électrique oscillant qui peut être raccordé aux deux conducteurs électriques (20, 22) et **en ce qu'**une mesure de l'usure de la garniture de frottement (14) est réalisée au moyen du circuit oscillant.

2. Dispositif selon la revendication 1, **caractérisé en ce que** les deux ou plusieurs conducteurs électriques (20, 22) s'étendent essentiellement en parallèle à l'intérieur de la garniture de frottement (14).

3. Dispositif selon l'une des revendications précédentes, **caractérisé en ce que** les deux ou plusieurs conducteurs électriques (20, 22) s'étendent essentiellement en parallèle à la normale de la surface de frottement du corps de freinage (12) ou du corps d'embrayage.

4. Dispositif selon l'une des revendications précédentes, **caractérisé en ce que** les deux ou plusieurs conducteurs électriques (20, 22) se terminent à chant sur la surface de frottement de la garniture de frottement (14).

5. Dispositif selon l'une des revendications précédentes, **caractérisé en ce que** pour mesurer une répartition spatiale de la température, des paires de conducteurs électriques (20, 22) sont prévues en différents emplacements à l'intérieur de la garniture de frottement (14).

6. Dispositif selon l'une des revendications précédentes, **caractérisé en ce que** les conducteurs électriques (20, 22) prévus dans la garniture de frottement (14) s'usent en même temps que la garniture de frottement (14) utilisée en freinage ou en embrayage.

7. Système de frein doté d'au moins un dispositif de frein (30, 40, 60, 70) qui présente au moins un dispositif selon l'une des revendications précédentes,
**caractérisé en ce que**
au moins une unité de commande (50) qui détecte l'état de fonctionnement du ou des dispositifs de frein (30, 40, 60, 70) est prévue et est configurée en fonction de l'état particulier de fonctionnement déterminé pour permettre une adaptation individuelle des paramètres de freinage du ou des dispositifs de frein (30, 40, 60, 70).

8. Système de freinage selon la revendication 7, **caractérisé en ce que** l'état de fonctionnement d'un dispositif de frein (30, 40, 60, 70) comprend au moins la température et/ou le degré d'usure d'une garniture de frottement (14) ou d'un corps de frein (12).

9. Système de frein selon l'une des revendications 7 ou 8 qui précèdent, **caractérisé en ce que** l'unité de commande (50) est configurée pour réguler ou ajuster la pression maximale admissible de freinage et/ou le jeu entre la garniture de frottement (14) et le corps de frein (12).

10. Procédé de commande d'un système de frein selon l'une des revendications 7 à 9 qui précèdent, **caractérisé par** les étapes qui consistent à :
- déterminer l'usure d'au moins une garniture de frottement (14) du dispositif de frein (10; 30, 40, 60, 70) au moyen d'un dispositif selon l'une des revendications 1 à 6,
- déterminer une température d'au moins un dispositif de frein (10; 30, 40, 60, 70) au moyen d'un dispositif selon l'une des revendications 1 à 6,
- déterminer séparément des paramètres de freinage du ou des dispositifs de frein (10; 30, 40, 60, 70) en fonction des paramètres d'usure et/ou de température déterminés pour chaque dispositif de frein (10; 30, 40, 60, 70) et
- commander et actionner le ou les dispositifs de frein (10; 30, 40, 60, 70) en fonction des paramètres de freinage déterminés séparément sur le ou les dispositifs de frein (10; 30, 40, 60, 70).
